(19) **Europäisches Patentamt**
**European Patent Office**
**Office européen des brevets**

(11) **EP 4 715 794 A1**

(12) **EUROPEAN PATENT APPLICATION**

(43) Date of publication:
**25.03.2026 Bulletin 2026/13**

(21) Application number: **25174412.4**

(22) Date of filing: **06.05.2025**

(51) International Patent Classification (IPC):
*G09G 3/20* (2006.01)   *H04N 9/64* (2023.01)
*H04N 1/40* (2006.01)   *H04N 1/64* (2006.01)

(52) Cooperative Patent Classification (CPC):
**H04N 9/64; G09G 3/2003; G09G 3/2044;
G09G 3/2059; G09G 3/2077;** H04N 1/40087;
H04N 1/644

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH LA MA MD TN**

(30) Priority: **23.09.2024 CN 202411325804**

(71) Applicant: **Leyard Optoelectronic Co., Ltd.
Beijing 100091 (CN)**

(72) Inventors:
• **HOU, Yingchen**
**Beijing, 100091 (CN)**
• **DU, Baifeng**
**Beijing, 100091 (CN)**
• **LU, Changjun**
**Beijing, 100091 (CN)**

(74) Representative: **Novagraaf Technologies
2 rue Sarah Bernhardt
CS90017
92665 Asnières-sur-Seine Cedex (FR)**

(54) **METHOD AND DEVICE FOR PROCESSING IMAGE, NONVOLATILE STORAGE MEDIUM, AND COMPUTER APPARATUS**

(57) Disclosed in the present disclosure are a method and device for processing an image, a nonvolatile storage, and a computer apparatus. The method includes: acquiring an initial color value corresponding to each of pixel points; determining an adjacent pixel point corresponding to each of pixel points in an arrangement sequence; adjusting an initial color value corresponding to the adjacent pixel point , and obtaining a new color value corresponding to each of pixel points; selecting two adjacent color values that are close to the new color value corresponding to each of pixel points from color values corresponding to a target color depth; and sequentially reading the two adjacent color values corresponding to each of pixel points and displaying a target image. The present disclosure solves a technical problem of a poor image display effect caused by color distortion of an image when a color depth of the image is adjusted.

**EP 4 715 794 A1**

# Description

## Technical Field

The present disclosure relates to the field of image processing, and particularly relates to a method and device for processing an image, a nonvolatile storage medium, and a computer apparatus.

## Background

As a type of common technology in the field of image processing, a dither algorithm is mainly used for converting a high-color depth image into a low-color depth image. In the related art, there are many ways to implement the video image dither algorithm, such as a space-based error diffusion dithering algorithm and a time-based frame rate control (FRC) algorithm.

However, the use of a single video image dithering algorithm possibly causes problems such as image color distortion and a strong split sense of color transition. For example, by using a single error diffusion dithering algorithm, optimal results probably cannot be provided for some types of images, such as images with a large number of high-frequency details, and color distortions will probably be caused in some cases, particularly in regions with smooth color transition. By using a single FRC algorithm, flickering or other time-domain artifacts will probably be caused. Especially in fast-changing scenes, since the FRC algorithm relies on persistence of vision of human eyes, A high color depth effect of FRC algorithm is probably inferior to a hardware-supported high color depth in some cases.

No effective solution to the above problems has been proposed yet.

## Summary

Examples of the present disclosure provide a method and device for processing an image, a nonvolatile storage medium, and a computer apparatus, so as to at least solve a technical problem of a poor image display effect caused by color distortion of an image when a color depth of the image is adjusted.

According to an aspect of the examples of the present disclosure, a method for processing an image is provided. The method includes: acquiring an initial color value corresponding to each of a plurality of pixel points in an initial image, wherein the initial color value is a color value corresponding to an initial color depth; determining an adjacent pixel point corresponding to each of the plurality of pixel points in an arrangement sequence of the plurality of pixel points in the initial image; adjusting an initial color value corresponding to the adjacent pixel point corresponding to each of the plurality of pixel points according to the initial color value corresponding to each of the plurality of pixel points, and obtaining a new color value corresponding to each of the plurality of pixel points; selecting two adjacent color values that are close to the new color value corresponding to each of the plurality of pixel points from color values corresponding to a target color depth; and sequentially reading the two adjacent color values corresponding to each of the plurality of pixel points in a preset reading sequence, and displaying a target image.

As at least one alternative embodiment, the determining an adjacent pixel point corresponding to each of the plurality of pixel points in an arrangement sequence of the plurality of pixel points in the initial image includes: determining a selection manner of the adjacent pixel point corresponding to each of the plurality of pixel points in a preset pixel point adjustment sequence; and determining the adjacent pixel point corresponding to each of the plurality of pixel points based on the arrangement sequence and the selection manner.

As at least one alternative embodiment, the adjusting an initial color value corresponding to the adjacent pixel point corresponding to each of the plurality of pixel points according to the initial color value corresponding to each of the plurality of pixel points, and obtaining a new color value corresponding to each of the plurality of pixel points include: sequentially determining a color diffusion value corresponding to the adjacent pixel point corresponding to each of the plurality of pixel points in a preset pixel point adjustment sequence according to the initial color value corresponding to each of the plurality of pixel points; and adjusting the initial color value corresponding to the adjacent pixel point corresponding to each of the plurality of pixel points according to the color diffusion value corresponding to the adjacent pixel point corresponding to each of the plurality of pixel points, and obtaining the new color value corresponding to each of the plurality of pixel points.

As at least one alternative embodiment, the sequentially determining a color diffusion value corresponding to the adjacent pixel point corresponding to each of the plurality of pixel points in a preset pixel point adjustment sequence according to the initial color value corresponding to each of the plurality of pixel points includes: determining an intermediate color value corresponding to each of the plurality of pixel points based on the initial color value corresponding to each of the plurality of pixel points; calculating a difference value between the initial color value corresponding to each of the plurality of pixel points and the intermediate color value corresponding to each of the plurality of pixel points; and calculating a product of the difference value corresponding to each of the plurality of pixel points and a preset ratio, and obtaining the color diffusion value corresponding to the adjacent pixel point corresponding to each of the plurality of pixel points.

As at least one alternative embodiment, the determining an intermediate color value corresponding to each of the plurality of pixel points based on the initial color value corresponding to each of the plurality of pixel points includes: determining a plurality of color regions based on the target color depth; determining a color region corresponding to the initial color value corresponding to each of the plurality of pixel points in the plurality of color regions; and determining an intermediate value of the color region corresponding to each of the plurality of pixel points as the intermediate color value corresponding to each of the plurality of pixel points.

As at least one alternative embodiment, the sequentially reading the two adjacent color values corresponding to each of the plurality of pixel points in a preset reading sequence, and displaying a target image include: determining a number proportion corresponding each of the two adjacent color values corresponding to each of the plurality of pixel points based on the new color value corresponding to each of the plurality of pixel points and the two adjacent color values corresponding to each of the plurality of pixel points; determining a reading number corresponding to each of the two adjacent color values corresponding to each of the plurality of pixel points based on the number proportion corresponding to each of the two adjacent color values corresponding to each of the plurality of pixel points; and sequentially reading the two adjacent color values corresponding to each of the plurality of pixel points in the reading sequence based on the reading number corresponding to each of the two adjacent color values corresponding to each of the plurality of pixel points, and displaying the target image.

As at least one alternative embodiment, the determining a number proportion corresponding to each of the two adjacent color values corresponding to each of the plurality of pixel points based on the new color value corresponding to each of the plurality of pixel points and the two adjacent color values corresponding to each of the plurality of pixel points includes: calculating a difference value between each of the two adjacent color values corresponding to each of the plurality of pixel points and the new color value corresponding to each of the plurality of pixel points as a first difference value corresponding to each of the two adjacent color values corresponding to each of the plurality of pixel points; calculating a difference value between the two adjacent color values corresponding to each of the plurality of pixel points as a second difference value corresponding to each of the plurality of pixel points; and determining the number proportion corresponding to each of the two adjacent color values corresponding to each of the plurality of pixel points based on a ratio of the first difference value corresponding to each of the two adjacent color values corresponding to each of the plurality of pixel points to the second difference value corresponding to each of the plurality of pixel points.

As at least one alternative embodiment, the method further includes: acquiring an initial video; dividing the initial video into a plurality of images, where the initial image is one of the plurality of images; and performing steps of sequentially reading the two adjacent color values corresponding to each of the plurality of pixel points in a preset reading sequence and displaying a target image on the plurality of images, displaying the plurality of target images, and obtaining a target video.

According to another aspect of the examples of the present disclosure, a device for processing an image is further provided. The device includes: an obtainment module used for acquiring an initial color value corresponding to each of a plurality of pixel points in an initial image, wherein the initial color value is a color value corresponding to an initial color depth; a determination module used for determining an adjacent pixel point corresponding to each of the plurality of pixel points in an arrangement sequence of the plurality of pixel points in the initial image; an adjustment module used for adjusting an initial color value corresponding to the adjacent pixel point corresponding to each of the plurality of pixel points according to the initial color value corresponding to each of the plurality of pixel points, and obtaining a new color value corresponding to each of the plurality of pixel points; a selection module used for selecting two adjacent color values that are close to the new color value corresponding to each of the plurality of pixel points from color values corresponding to a target color depth; and a reading module used for sequentially reading the two adjacent color values corresponding to each of the plurality of pixel points in a preset reading sequence, and displaying a target image.

According to yet another aspect of the examples of the present disclosure, a nonvolatile storage medium is further provided. The nonvolatile storage medium includes a stored program. The program controls an apparatus where the nonvolatile storage medium is positioned to perform the method for processing an image according to any one of the above items when run.

According to yet another aspect of the examples of the present disclosure, a computer apparatus is further provided. The computer apparatus includes a processor. The processor is used for running a program. The program performs the method for processing an image according to any one of the above items when run.

According to still another aspect of the examples of the present disclosure, a computer program product is further provided. The computer program product includes a computer program. The computer program implements the method for processing an image according to any one of the above items when executed by a processor.

In the examples of the present disclosure, the method for processing an image is used. The initial color value corresponding to each of the plurality of pixel points in the initial image is acquired, wherein the initial color value is the color value corresponding to the initial color depth. The adjacent pixel point corresponding to each of the plurality of pixel points is determined in the arrangement sequence of the plurality of pixel points in the initial image. The initial color value corresponding to the adjacent pixel point corresponding to each of the plurality of pixel points is adjusted according to the initial color value corresponding to each of the plurality of pixel points, and the new color value corresponding to each of the plurality of pixel points is obtained. The two adjacent color values that are close to the new color value corresponding to each of the plurality of pixel points are selected from the color values corresponding to the target color depth. The two adjacent color values corresponding to each of the plurality of pixel points are sequentially read in the preset reading sequence, and the target image is displayed. Accordingly, a purpose of combining a dithering algorithm and a frame rate control (FRC) algorithm to compensate for defects caused by processing images through a single algorithm is achieved, further a technical effect of improving a display effect of a video image is achieved, and the technical problem of a poor image display effect caused by color distortion of an image when a color depth of the image is adjusted is further solved.

**Brief Description of the Drawings**

The accompanying drawings described herein are used for providing further understanding of the present disclosure as a constituent part of the present disclosure. The illustrative examples of the present disclosure and their descriptions serve to explain the present disclosure, instead of limiting the present disclosure improperly. In the figures:

Fig. 1 is a structural block diagram of hardware of a computer terminal for implementing a method for processing an image;

Fig. 2 is a flowchart of a method for processing an image according to an example of the present disclosure;

Fig. 3 is a flowchart of steps of a method for processing a color depth of a video according to an optional example of the present disclosure; and

Fig. 4 is a structural block diagram of a device for processing an image according to an example of the present disclosure.

**Detailed Description of the Embodiments**

In order to enable those skilled in the art to better understand solutions of the present disclosure, the technical solutions in examples of the present disclosure will be clearly and comprehensively described below in conjunction with the accompanying drawings in the examples of the present disclosure. Apparently, the examples described are merely some examples rather than all examples of the present disclosure. Based on the examples of the present disclosure, all other examples acquired by those of ordinary skill in the art without making creative efforts fall should be within the scope of protection of the present disclosure.

It should be noted that the terms "first", "second", etc. in the description and claims of the present disclosure are used for distinguishing between similar objects, instead of necessarily describing a specific sequence or a precedence order. It should be understood that data used in this way can be interchanged where appropriate, so that the examples of the present described herein may be implemented in other sequences than those illustrated or described herein. Furthermore, the terms "comprise", "include", "have", and any variations thereof are intended to cover non-exclusive inclusions, for example, processes, methods, systems, products, or devices that includes a series of steps or units are not necessarily limited to those explicitly listed steps or units, but may include other steps or units not explicitly listed or inherent to these processes, methods, products, or devices.

A method example for processing an image is provided according to an example of the present disclosure. It should be noted that steps shown in the flowcharts of the accompanying drawings may be performed in a computer system, such as a set of computer-executable instructions. Moreover, although logic orders are shown in the flowcharts, in some cases, the steps shown or described may be performed in an order different from those herein.

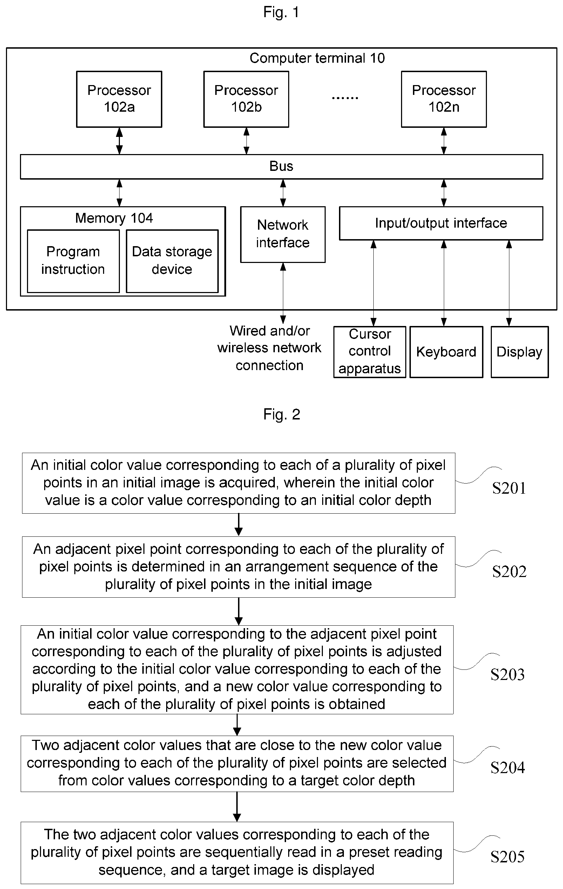

A method example according to Example 1 of the present application may be performed in a mobile terminal, a computer terminal, or a similar computing apparatus. Fig. 1 is a structural block diagram of hardware of a computer terminal for implementing a method for processing an image. As shown in Fig. 1, the computer terminal 10 may include one or more processors (shown as 102a, 102b,..., and 102n in the figure), and a memory 104 configured to store data, where the processors may include, but are not limited to, a microcontroller unit (MCU) or a field programmable gate array (FPGA), etc. In addition, the computer terminal may further include a display, an input/output interface (I/O interface), a universal serial bus (USB) port (which may be included as one of ports of a BUS), a network interface, a power supply, and/or a camera. Those of ordinary skill in the art can understand that the structure shown in Fig. 1 is merely illustrative and does not limit the structure of the above electronic apparatus. For example, the mobile terminal 10 may further include more or fewer assemblies than those shown in Fig. 1, or have a differing configuration from that shown in Fig. 1.

It should be noted that the above one or more processors and/or other data processing circuits may generally be referred to as "data processing circuits" herein. The data processing circuits may be embodied as software, hardware, firmware, or any other combinations in all or in part. In addition, the data processing circuits may be single stand-alone processing modules, or incorporated in all or in part into any one of other elements in the computer terminal 10. As involved in the examples of the present application, the data processing circuits act as a type of processor control (configured to select a variable resistance termination path connected to the interface).

The memory 104 may be used for storing a software program of application software and a module, for example, program instructions/data storage device corresponding to the method for processing an image in the example of the present disclosure. The processor runs the software program and the module stored in the memory 104 to perform various functional applications and data processing, that is, to implement the method for processing an image of the above application. The memory 104 may include a high-speed random access memory, and may further include a non-volatile memory, such as one or more magnetic storage apparatuses, flash memories, or other non-volatile solid-state memories. In some instances, the memory 104 may further include memories remotely configured relative to the processor. These remote memories may be connected to the computer terminal 10 through a network. The instances of the network include, but are not limited to, the Internet, an intranet, a local area network, a mobile communication network, and their combinations.

The display may be, for example, a touch screen type liquid crystal display (LCD) that may enable a user to interact with a user interface of the computer terminal 10.

Fig. 2 is a flowchart of a method for processing an image according to an example of the present disclosure. As shown in Fig. 2, the method includes:

S201, an initial color value corresponding to each of a plurality of pixel points in an initial image is acquired, wherein the initial color value is a color value corresponding to an initial color depth.

In this step, the initial image may be a single image or an image in a video. The acquired initial color value is a color value corresponding to the initial color depth. The color value refers to a (red, green, blue) RGB value, which is a numerical representation method for representing color based on three basic colors: red, green and blue. An RGB color value may be expressed in a format of (r, g, b), wherein 'r' represents a red component, 'g' represents a green component, and 'b' represents a blue component. A value of each component may range from 0 to 255, wherein 0 represents minimum intensity of the color component and 255 represents maximum intensity of the color component. For example, pure red may be represented by (255, 0, 0), pure green may be represented by (0, 255, 0), and pure blue may be represented by (0, 0, 255).

A color depth of an image, also known as the number of color bits or a bit depth, refers to the number of colors that each pixel point in a digital image may represent. The color depth is measured in bits and determines types of colors that may be represented in an image. The higher the color depth is, the richer the color and finer the detail of the image that can be represented. For example, 1-bit color depth corresponds to only two colors, the two colors are usually black and white, and an image at the 1-bit color depth appear as a binary image. 8-bit color depth may represent 256 (2^8) colors, and images at the 8-bit color depth are suitable for some simple graphics and icons, but colors may not be rich enough for color photos. In different color depths, due to different types of colors that may be displayed, corresponding RGB values used for representing colors are also different. For example, at higher color depths, a value of each component of RGB may be any one of 0 to 255. However, at lower color depths, due to limited types of colors that may be displayed, the value of each component of RGB can only be selected from a part of 0 to 255.

S202, an adjacent pixel point corresponding to each of the plurality of pixel points is determined in an arrangement sequence of the plurality of pixel points in the initial image.

In this step, in the initial image, pixel points are usually arranged in a matrix form. Accordingly, there may be many ways to select pixel points adjacent to a pixel point in the matrix. For example, pixel points at a lower left side, a lower side, a lower right side and a right side of a target pixel point may be selected as adjacent pixel points of the target pixel point. Pixel points at a left side, a lower left side, a lower side, and a lower right side of the target pixel point may also be selected as adjacent pixel points of the target pixel point. For example, the selection way of adjacent pixel points may be determined by a diffusion matrix corresponding to an algorithm. Different algorithms correspond to different diffusion matrices. Sequences of adjusting pixel point color values corresponding to different diffusion matrices are also different.

S203, an initial color value corresponding to the adjacent pixel point corresponding to each of the plurality of pixel points is adjusted according to the initial color value corresponding to each of the plurality of pixel points, and a new color value corresponding to each of the plurality of pixel points is obtained.

In this step, adjustment of the initial color value may be implemented based on a space dithering algorithm. For example, an error diffusion dithering algorithm may be used for work by proportionally distributing quantization errors of pixel points into surrounding pixel points, so as to reduce an influence of quantization errors on visual quality of an image, help to mix colors more smoothly, and create an illusion that there are more colors. A regular dithering algorithm may also be used. A periodic and definite dithering matrix is used in a dithering process. The dithering matrix may also be referred to as a dithering template. By placing the dithering matrix in a sub-region of the target image, pixel points in the region correspond one to one to threshold values in the dithering matrix, and a final display value of each pixel point is determined by comparing the color value of the pixel point with the threshold value. A random dithering algorithm may also be used for simulating more color gradations by randomly adding noise to the image. A dither value for each pixel point is generated by a random number generator, and these random numbers usually based on a probability distribution.

S204, two adjacent color values that are close to the new color value corresponding to each of the plurality of pixel points are selected from color values corresponding to a target color depth.

In this step, the number of color values that may be obtained from the target color depth is less than the number of color values that may be obtained from the initial color depth, such that in order to convert the new color value corresponding to each of the plurality of pixel points from the initial color depth to the target color depth, one or more color values closest to the new color value corresponding to each of the plurality of pixel points at the target color depth may be selected. Based on division regions of color values at the target color depth, a region corresponding to the new color value corresponding to each of the plurality of pixel points may be obtained. Each region corresponds to one color value at the target color depth. The region corresponding to the new color value of each of the plurality of pixel points and a nearest adjacent region are determined. Color values corresponding to the two regions at the target color depth are selected as the two adjacent color values. Accordingly, two different adjacent color values may be mixed to display a color effect similar to the new color value corresponding to each of the plurality of pixel points.

S205, the two adjacent color values corresponding to each of the plurality of pixel points are sequentially read in a preset reading sequence, and a target image is displayed.

In this step, the target image is displayed by sequentially reading two different color values based on a principle of a frame rate control (FRC) algorithm. The frame rate control (FRC) algorithm is a pixel dithering algorithm widely used in display technology. It mainly uses physiological characteristics of visual inertia of human eyes to achieve display of the target color values through temporal color mixing technology, such that display effects similar to those at higher color depths can also be achieved at low color depths. A core of the FRC algorithm lies in using the visual inertia of human eyes to brightness changes. When color values of pixel points in an image change rapidly in short time, human eyes will not immediately perceive this change, but will average the rapidly changing color value signal to perceive an image with intermediate color values. Color mixing can be achieved by alternately displaying different color values between a plurality of frames. Based on persistence of vision of human eyes, a color depth perceived by human eyes is increased. Accordingly, the two adjacent color values may be sequentially displayed in the preset sequence, such that human eyes can perceive the desired intermediate color values. The preset sequence may be random, may be determined according to the color values, or may be determined according to the number of the two color values.

Through the above steps, a purpose of combining a dithering algorithm and a frame rate control (FRC) algorithm to compensate for defects caused by processing images through a single algorithm is achieved, further a technical effect of improving a display effect of a video image is achieved, and the technical problem of a poor image display effect caused by color distortion of an image when a color depth of the image is adjusted is further solved.

As an optional example, the adjacent pixel point corresponding to each of the plurality of pixel points is determined in an arrangement sequence of the plurality of pixel points in the initial image as follows: a selection manner of the adjacent pixel point corresponding to each of the plurality of pixel points is determined in a preset pixel point adjustment sequence; and the adjacent pixel point corresponding to each of the plurality of pixel points is determined based on the arrangement sequence and the selection manner.

As at least one alternative embodiment, there may be a number of options for the adjustment sequence of the pixel points. For example, an adjustment sequence of traversing row by row and column by column may be used, which is the most direct and common adjustment sequence. Starting from an upper left corner of the image, adjustment is performed downwards row by row, and each pixel point is adjusted from left to right in each row. A spiral adjustment sequence may also be used. Starting from a center of the image, each pixel point is adjusted in a spiral manner outward. Such an adjustment sequence can help diffuse errors more evenly, but is relatively complicated to implement. The adjustment sequence may also be customized according to specific requirements. For example, a region of the image may be chosen to be adjusted before other regions of the image are adjusted, depending on specific image characteristics or requirements. Selection of the adjustment sequence may influence an effect and performance of the algorithm. In practical application, an appropriate sequence needs to be selected according to specific requirements and image characteristics.

According to different adjustment sequences, in order to avoid influencing adjusted pixel points, ways to select adjacent pixel points are also different. For example, when the adjustment sequence starts from an upper left corner of the image and proceeds downwards row by row to adjust each pixel point from left to right in each row, optional adjacent pixel points are located on a lower left side, a lower side, a lower right side, and a right side of the target pixel point in order not to influence a last adjusted pixel point. When the adjustment sequence starts from an upper right corner of the image and proceeds downwards row by row to adjust each pixel point from right to left in each row, optional adjacent pixel points are located on a left side, a lower left side, a lower side, and a lower right side of the target pixel point.

As an optional example, the initial color value corresponding to the adjacent pixel point corresponding to each of the plurality of pixel points is adjusted according to the initial color value corresponding to each of the plurality of pixel points, and the new color value corresponding to each of the plurality of pixel points is obtained. A color diffusion value corresponding to the adjacent pixel point corresponding to each of the plurality of pixel points is sequentially determined in a preset pixel point adjustment sequence according to the initial color value corresponding to each of the plurality of pixel points; and the initial color value corresponding to the adjacent pixel point corresponding to each of the plurality of pixel points is adjusted according to the color diffusion value corresponding to the adjacent pixel point corresponding to each of the plurality of pixel points, and the new color value corresponding to each of the plurality of pixel points is obtained.

As at least one alternative embodiment, the initial color value of each of the plurality of pixel points may be adjusted through an error diffusion algorithm. For example, first, a first pixel point is extracted to be processed in the preset adjustment sequence. Further, a color diffusion value of the first pixel point may be determined based on the initial color depth and the target color depth. The color diffusion value is diffused onto an initial color value of each of one or more selected adjacent pixel points. Finally, each pixel point in the image is sequentially adjusted from the first pixel point in the preset adjustment sequence, and a new color value corresponding to each pixel point may be obtained.

As an optional example, the color diffusion value corresponding to the adjacent pixel point corresponding to each of the plurality of pixel points is sequentially determined in the preset pixel point adjustment sequence according to the initial color value corresponding to each of the plurality of pixel points as follows: an intermediate color value corresponding to each of the plurality of pixel points is determined based on the initial color value corresponding to each of the plurality of pixel points; a difference value between the initial color value corresponding to each of the plurality of pixel points and the intermediate color value corresponding to each of the plurality of pixel points is calculated; and a product of the difference value corresponding to each of the plurality of pixel points and a preset ratio is calculated, and the color diffusion value corresponding to the adjacent pixel point corresponding to each of the plurality of pixel points is obtained.

As at least one alternative embodiment, the color diffusion value corresponding to adjacent pixel point may be determined by calculating a quantization error. First, a plurality of color regions may be determined based on the target color depth. In the plurality of color regions, an color region corresponding to the initial color value corresponding to each of the plurality of pixel points is determined. Further an intermediate value of the corresponding color region may be used as an intermediate color value corresponding to the color region. An intermediate color value corresponding to the initial color value of the first pixel point is selected. The intermediate color value is subtracted from the initial color value to obtain an error value. It needs to be noted that the error value may be positive or negative. Finally, the error value is multiplied by the preset ratio to obtain a color diffusion value corresponding to each of the adjacent pixel points. Different algorithms correspond to different ratios. For example, a Floyd-Steinberg algorithm may be used. A used diffusion ratio is expressed in a form of a matrix as follows:

$$* \quad 7/16$$

$$3/16 \quad 5/16 \quad 1/16$$

wherein "*" indicates a pixel point to be adjusted, and "7/16", "3/16", "5/16", and "1/16" indicate diffusion ratios corresponding to adjacent pixel points, that is, the preset ratios.

As an optional example, the intermediate color value corresponding to each of the plurality of pixel points is determined based on the initial color value corresponding to each of the plurality of pixel points as follows: a plurality of color regions are determined based on the target color depth; a color region corresponding to the initial color value corresponding to each of the plurality of pixel points is determined in the plurality of color regions; and an intermediate value of the color region corresponding to each of the plurality of pixel points is determined as the intermediate color value corresponding to each of the plurality of pixel points.

As at least one alternative embodiment, a color value of each channel ranges from 0 to 255. But color types that may be represented at different color depths are different. For example, for an image with a color depth of 2 bits, although the color value of one channel ranges from 0 to 255, 0 to 255 may be divided into four regions, and each region only represents one color to satisfy color depth requirements. For example, for an image with a color depth of 4 bits, 0 to 255 may be divided into 16 regions correspondingly. Accordingly, the plurality of color regions may be determined based on the target color depth. Further the intermediate value of each color region may be used as the intermediate color value corresponding to the color region. By determining the color region corresponding to the initial color value corresponding to each of the plurality of pixel points, the intermediate color value corresponding to each of the plurality of pixel points may be determined, and the purpose of color depth conversion is achieved.

As an optional example, the two adjacent color values corresponding to each of the plurality of pixel points are sequentially read in the preset reading sequence, and the target image is displayed. A number proportion corresponding each of the two adjacent color values corresponding to each of the plurality of pixel points is determined based on the new color value corresponding to each of the plurality of pixel points and the two adjacent color values corresponding to each of the plurality of pixel points. A reading number corresponding to each of the two adjacent color values corresponding to each of the plurality of pixel points is determined based on the number proportion corresponding to each of the two adjacent color values corresponding to each of the plurality of pixel points. The two adjacent color values corresponding to each of the plurality of pixel points are sequentially read in the reading sequence based on the reading number corresponding to each of the two adjacent color values corresponding to each of the plurality of pixel points, and the target image is displayed.

As at least one alternative embodiment, a number proportion of each of the two color values corresponding to each pixel point may be calculated based on the new color value corresponding to each of the plurality of pixel points and the two adjacent color values corresponding to each of the plurality of pixel points. Generally speaking, the two color values are different, and the corresponding number proportions of the two color values are also different. A sum of the number proportions of the two color values is 1. According to the number proportions of the two adjacent color values and a total number of color values that can be stored, numbers corresponding to the two adjacent color values may be calculated respectively. The number of the memories may be taken as the total number occupied by the two adjacent color values. One color value corresponding to all pixel points of one image is stored in one memory. Finally, the two different adjacent color values are alternately read out and displayed in the reading sequence. A visual effect of color mixing can be achieved by using the visual inertia of human eyes, and the target image at a low color depth is displayed. The target image has a visual effect similar to that of the initial image at a high color depth.

As an optional example, the number proportion corresponding to each of the two adjacent color values corresponding to each of the plurality of pixel points is determined based on the new color value corresponding to each of the plurality of pixel points and the two adjacent color values corresponding to each of the plurality of pixel points as follows: a difference value between each of the two adjacent color values corresponding to each of the plurality of pixel points and the new color value corresponding to each of the plurality of pixel points is calculated as a first difference value corresponding to each of the two adjacent color values corresponding to each of the plurality of pixel points; a difference value between the two adjacent color values corresponding to each of the plurality of pixel points is calculated as a second difference value corresponding to each of the plurality of pixel points; and the number proportion corresponding to each of the two adjacent color values corresponding to each of the plurality of pixel points is determined based on a ratio of the first difference value corresponding to each of the two adjacent color values corresponding to each of the plurality of pixel points to the second difference value corresponding to each of the plurality of pixel points.

As at least one alternative embodiment, the difference value between each of the two adjacent color values and the new color value may be calculated, and the difference value between the two adjacent color values may be calculated. Further, ratios of the difference value between each of the two adjacent color values and the new color value and the difference value between the two adjacent color values, that is, difference values between the two adjacent color values and the new color value/the difference value between the two adjacent color values, are calculated respectively to obtain the number proportions corresponding to the two adjacent color values respectively.

As an optional example, the method further includes: an initial video is acquired; the initial video is divided into a plurality of images, where the initial image is one of the plurality of images; and steps that the two adjacent color values corresponding to each of the plurality of pixel points are sequentially read in the preset reading sequence and the target image is displayed are performed on the plurality of images, the plurality of target images are displayed, and a target video is obtained.

As at least one alternative embodiment, in the example, a method for processing one image may be applied to a video. For example, a video to be processed is divided into a plurality of images. Image processing steps in the above examples are sequentially performed from the first frame of image to obtain each processed image. Finally color values corresponding to pixel points are sequentially read to display the plurality of processed images, such that a final target video can be obtained.

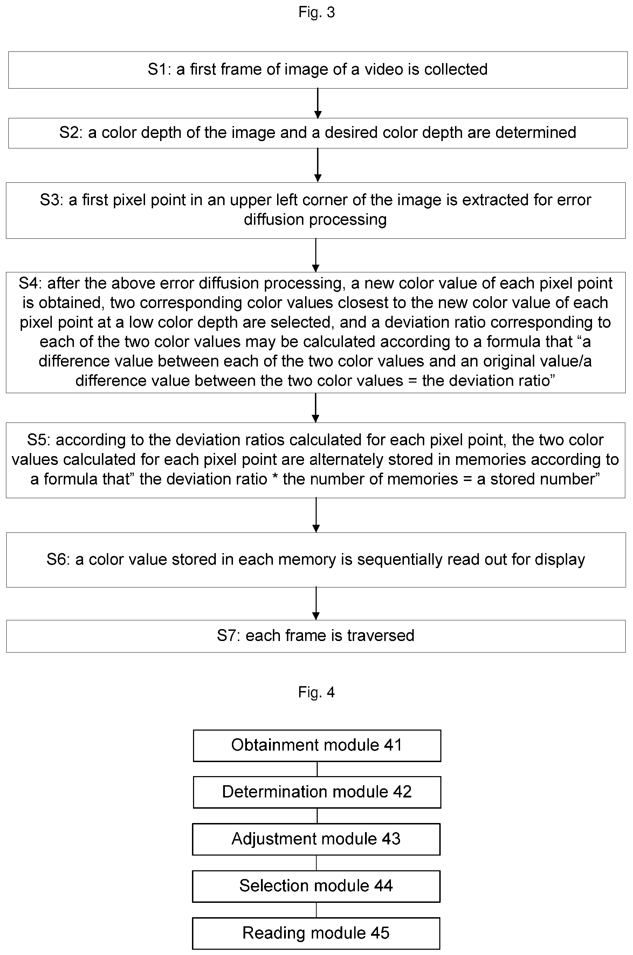

As an optional example, the present disclosure provides a process of processing color depths of images in a video frame by frame. Fig. 3 is a flowchart of steps of a method for processing a color depth of a video according to an optional example of the present disclosure. As shown in Fig. 3, specific steps are as follows:

S1: a first frame of image of a video is collected.

S2: a color depth of the image and a desired color depth are determined. For example, in a case where the color depth of the image is 8 bits, the desired color depth is 4 bits.

S3: a first pixel point in an upper left corner of the image is extracted for error diffusion processing.

S31: an RGB value corresponding to an RGB value of the pixel point at a low color depth is calculated. For example, an initial color value of the pixel point in channel R is 12, and is between 0 and 15 at an 8-bit color depth. A color value region corresponding to a 4-bit color depth is a first region. Thus the color value corresponding to the pixel point at the low color depth is 0, that is, an intermediate color value.

S32: since an error value is generated when the RGB value is converted from a higher color depth to a lower color depth, the error value may be calculated according to a formula that "the original value - a conversion value = the error value". For example, the initial color value is 12, and the conversion value, that is, the intermediate color value, is 0, such that the error value is 12-0 = 12.

S33: error diffusion is performed by error diffusion dithering and added to RGB values of an initial image. For example, assuming a Floyd-Steinberg algorithm is used, a diffusion matrix is as follows:

$$* \quad 7/16$$

$$3/16 \quad 5/16 \quad 1/16$$

An error value of a first pixel point is 12. An initial color value of a pixel point on a right side of the first pixel point is 13. According to an error diffusion principle, the error value is diffused proportionally to the pixel point on the right side, that is, a color value received by the pixel point on the right side is 12 * (7/16) = 21/4. Thus an updated color value of the pixel point on the right side is 13+21/4 = 73/4. Subsequent processing of the pixel point on the right side is performed based on the updated color value.

S34: all pixel points in the image are traversed.

S4: after the above error diffusion processing, a new color value of each pixel point is obtained, two corresponding color values closest to the new color value of each pixel point at a low color depth are selected, and a deviation ratio corresponding to each of the two color values may be calculated according to a formula that "a difference value between each of the two color values and an original value (that is, the new color value)/a difference value between the two color values = the deviation ratio". Assuming that one deviation ratio of each pixel point is a, and the other deviation ratio of each pixel point should be 1-a. For example, based on the 4-bit color depth, the new color values may range from 0 to 15. In a case where the color value corresponding to the first pixel point is 0, the color value corresponding to the second pixel point is 1, two color values corresponding to the first pixel point are 0 and 1, and two color values corresponding to the second pixel point are 0 and 2, further deviation ratios of the first pixel point are 0 and 1 respectively, and deviation ratios of the second pixel point are 1/2 and 1/2 respectively.

S5: according to the deviation ratios calculated for each pixel point, the two color values calculated for each pixel point are alternately stored in memories according to a formula that" the deviation ratio * the number of memories = a stored number". For example, there are four memories in total, and the deviation ratios of the second pixel point are 1/2 and 1/2 respectively, such that corresponding stored numbers are 2 and 2, that is, the color value 0 is stored in two memories, and the color value 2 is also stored in two memories.

S6: a color value stored in each memory is sequentially read out for display. Each memory stores a color value of all pixel points of an image. A reading sequence has no influence on a display result. The value of each memory is sequentially read out, such that the image with a required low color depth can be displayed.

S7: each frame is traversed.

It should be noted that for the sake of simplicity of description, each of the foregoing method examples is expressed as a series of combinations of actions, but those skilled in the art should appreciate that the present disclosure is not limited by the sequence of actions described because some steps can be performed in other sequences or simultaneously according to the present disclosure. Secondly, those skilled in the art should also appreciate that the examples described in the specification are preferred examples, and actions and modules involved are not necessarily required for the present disclosure.

Through the description of embodiments, those skilled in the art can clearly understand that the method for processing an image according to the above example may be implemented in combination of software and a necessary general-purpose hardware platform and may also be certainly implemented through hardware. However, the former is a preferred embodiment in many cases. Based on such understanding, the technical solution in essence of the present disclosure or the part that contributes to the prior art can be embodied in the form of software products. The computer software product is stored in one storage medium (such as a read-only memory (ROM)/a random access memory (RAM), a magnetic disk, or an optical disk), and includes several instructions to cause one terminal apparatus (such as a mobile phone, a computer, a server, or a network apparatus) to execute the method of each example of the present disclosure.

According to the examples of the present disclosure, a device for processing an image for implementing the method for processing an image is further provided. Fig. 4 is a structural block diagram of a device for processing an image according to an example of the present disclosure. As shown in Fig. 4, the device for processing an image includes an obtainment module 41, a determination module 42, an adjustment module 43, a selection module 44, and a reading module 45.

The obtainment module 41 is used for acquiring an initial color value corresponding to each of a plurality of pixel points in an initial image. The initial color value is a color value corresponding to an initial color depth.

The determination module 42 is connected to the obtainment module 41 and used for determining an adjacent pixel point corresponding to each of the plurality of pixel points in an arrangement sequence of the plurality of pixel points in the initial image.

The adjustment module 43 is connected to the determination module 42 and used for adjusting an initial color value corresponding to the adjacent pixel point corresponding to each of the plurality of pixel points according to the initial color value corresponding to each of the plurality of pixel points, and obtaining a new color value corresponding to each of the plurality of pixel points.

The selection module 44 is connected to the adjustment module 43 and used for selecting two adjacent color values that are close to the new color value corresponding to each of the plurality of pixel points from color values corresponding to a target color depth.

The reading module 45 is connected to the selection module 44 and used for sequentially reading the two adjacent color values corresponding to each of the plurality of pixel points in a preset reading sequence, and displaying a target image.

It should be noted that the obtainment module 41, the determination module 42, the adjustment module 43, the selection module 44, and the reading module 45 correspond to S201 to S205 in the examples, and instances and application scenarios implemented by the plurality of modules and corresponding steps are the same, but are not limited to the contents disclosed in the examples. It should be noted that the modules described above may be run in the computer terminal 10 provided in the example as part of the device.

An example of the present disclosure may provide a computer apparatus. As at least one alternative embodiment, in the example, the computer apparatus may be located in at least one of a plurality of network apparatuses of a computer network. The computer apparatus includes a memory and a processor.

The memory may be used for storing software programs and modules, such as program instructions/modules corresponding to the method and device for processing an image in the examples of the present disclosure. The processor performs various functional applications and data processing by running the software programs and modules stored in the memory, that is, implements the method for processing an image described above. The memory may include a high-speed random access memory, and may further include a non-volatile memory, such as one or more magnetic storage apparatuses, flash memories, or other nonvolatile solid-state memories. In some instances, the memory may further include memories remotely configured relative to the processor. These remote memories may be connected to the computer terminal through a network. The instances of the network include, but are not limited to, the Internet, an intranet, a local area network, a mobile communication network, and their combinations.

The process may call information and application programs stored in the memory through a transmission device, so as to perform the follow steps. An initial color value corresponding to each of a plurality of pixel points in an initial image is acquired, wherein the initial color value is a color value corresponding to an initial color depth. An adjacent pixel point corresponding to each of the plurality of pixel points is determined in an arrangement sequence of the plurality of pixel points in the initial image. An initial color value corresponding to the adjacent pixel point corresponding to each of the plurality of pixel points is adjusted according to the initial color value corresponding to each of the plurality of pixel points, and a new color value corresponding to each of the plurality of pixel points is obtained. Two adjacent color values that are close to the new color value corresponding to each of the plurality of pixel points are selected from color values corresponding to a target color depth. The two adjacent color values corresponding to each of the plurality of pixel points are sequentially read in a preset reading sequence, and a target image is displayed.

As at least one alternative embodiment, the process may further execute the following program codes: the adjacent pixel point corresponding to each of the plurality of pixel points is determined in an arrangement sequence of the plurality of pixel points in the initial image as follows: a selection manner of the adjacent pixel point corresponding to each of the plurality of pixel points is determined in a preset pixel point adjustment sequence; and the adjacent pixel point corresponding to each of the plurality of pixel points is determined based on the arrangement sequence and the selection manner.

As at least one alternative embodiment, the process may further execute the following program codes: the initial color value corresponding to the adjacent pixel point corresponding to each of the plurality of pixel points is adjusted according to the initial color value corresponding to each of the plurality of pixel points, and the new color value corresponding to each of the plurality of pixel points is obtained. A color diffusion value corresponding to the adjacent pixel point corresponding to each of the plurality of pixel points is sequentially determined in a preset pixel point adjustment sequence according to the initial color value corresponding to each of the plurality of pixel points; and the initial color value corresponding to the adjacent pixel point corresponding to each of the plurality of pixel points is adjusted according to the color diffusion value corresponding to the adjacent pixel point corresponding to each of the plurality of pixel points, and the new color value corresponding to each of the plurality of pixel points is obtained.

As at least one alternative embodiment, the process may further execute the following program codes: the color diffusion value corresponding to the adjacent pixel point corresponding to each of the plurality of pixel points is sequentially determined in the preset pixel point adjustment sequence according to the initial color value corresponding to each of the plurality of pixel points as follows: an intermediate color value corresponding to each of the plurality of pixel points is determined based on the initial color value corresponding to each of the plurality of pixel points; a difference value between the initial color value corresponding to each of the plurality of pixel points and the intermediate color value corresponding to each of the plurality of pixel points is calculated; and a product of the difference value corresponding to each of the plurality of pixel points and a preset ratio is calculated, and the color diffusion value corresponding to the adjacent pixel point corresponding to each of the plurality of pixel points is obtained.

As at least one alternative embodiment, the process may further execute the following program codes: the intermediate color value corresponding to each of the plurality of pixel points is determined based on the initial color value corresponding to each of the plurality of pixel points as follows: a plurality of color regions are determined based on the target color depth; a color region corresponding to the initial color value corresponding to each of the plurality of pixel points is determined in the plurality of color regions; and an intermediate value of the color region corresponding to each of the plurality of pixel points is determined as the intermediate color value corresponding to each of the plurality of pixel points.

As at least one alternative embodiment, the process may further execute the following program codes: the two adjacent color values corresponding to each of the plurality of pixel points are sequentially read in the preset reading sequence, and the target image is displayed. A number proportion corresponding each of the two adjacent color values corresponding to each of the plurality of pixel points is determined based on the new color value corresponding to each of the plurality of pixel points and the two adjacent color values corresponding to each of the plurality of pixel points. A reading number corresponding to each of the two adjacent color values corresponding to each of the plurality of pixel points is determined based on the number proportion corresponding to each of the two adjacent color values corresponding to each of the plurality of pixel points. The two adjacent color values corresponding to each of the plurality of pixel points are sequentially read in the reading sequence based on the reading number corresponding to each of the two adjacent color values corresponding to each of the plurality of pixel points, and the target image is displayed.

As at least one alternative embodiment, the process may further execute the following program codes: the number proportion corresponding to each of the two adjacent color values corresponding to each of the plurality of pixel points is determined based on the new color value corresponding to each of the plurality of pixel points and the two adjacent color values corresponding to each of the plurality of pixel points as follows: a difference value between each of the two adjacent color values corresponding to each of the plurality of pixel points and the new color value corresponding to each of the plurality of pixel points is calculated as a first difference value corresponding to each of the two adjacent color values corresponding to each of the plurality of pixel points; a difference value between the two adjacent color values corresponding to each of the plurality of pixel points is calculated as a second difference value corresponding to each of the plurality of pixel points; and the number proportion corresponding to each of the two adjacent color values corresponding to each of the plurality of pixel points is determined based on a ratio of the first difference value corresponding to each of the two adjacent color values corresponding to each of the plurality of pixel points to the second difference value corresponding to each of the plurality of pixel points.

As at least one alternative embodiment, the process may further execute the following program codes: an initial video is obtained; the initial video is divided into a plurality of images, where the initial image is one of the plurality of images; and steps that the two adjacent color values corresponding to each of the plurality of pixel points are sequentially read in the preset reading sequence and the target image is displayed are performed on the plurality of images, the plurality of target images are displayed, and a target video is obtained.

According to the examples of the present disclosure, a method for processing an image is provided. The initial color value corresponding to each of the plurality of pixel points in the initial image is acquired, wherein the initial color value is the color value corresponding to the initial color depth. The adjacent pixel point corresponding to each of the plurality of pixel points is determined in the arrangement sequence of the plurality of pixel points in the initial image. The initial color value corresponding to the adjacent pixel point corresponding to each of the plurality of pixel points is adjusted according to the initial color value corresponding to each of the plurality of pixel points, and the new color value corresponding to each of the plurality of pixel points is obtained. The two adjacent color values that are close to the new color value corresponding to each of the plurality of pixel points are selected from the color values corresponding to the target color depth. The two adjacent color values corresponding to each of the plurality of pixel points are sequentially read in the preset reading sequence, and the target image is displayed. Accordingly, a purpose of combining a dithering algorithm and a frame rate control (FRC) algorithm to compensate for defects caused by processing images through a single algorithm is achieved, further a technical effect of improving a display effect of a video image is achieved, and the technical problem of a poor image display effect caused by color distortion of an image when a color depth of the image is adjusted is further solved.

Those of ordinary skill in the art may understand that all or some of the steps in the various methods of the above examples may be completed by instructing hardware related to a terminal apparatus through a program. The program may be stored in a nonvolatile storage medium that may include a flash disk, a read-only memory (ROM), a random access memory (RAM), a magnetic disk or an optical disk, etc.

The examples of the present disclosure further provide a nonvolatile storage medium. As at least one alternative embodiment, in the example, the nonvolatile storage medium may be used for storing program codes executed by the method for processing an image according to the above examples.

As at least one alternative embodiment, in the example, the nonvolatile storage medium may be located in any computer terminal in a computer terminal group in a computer network, or located in any mobile terminal in a mobile terminal group.

As at least one alternative embodiment, in the example, the nonvolatile storage medium is configured to store program codes used for performing the following steps. An initial color value corresponding to each of a plurality of pixel points in an initial image is acquired, wherein the initial color value is a color value corresponding to an initial color depth. An adjacent pixel point corresponding to each of the plurality of pixel points is determined in an arrangement sequence of the plurality of pixel points in the initial image. An initial color value corresponding to the adjacent pixel point corresponding to each of the plurality of pixel points is adjusted according to the initial color value corresponding to each of the plurality of pixel points, and a new color value corresponding to each of the plurality of pixel points is obtained. Two adjacent color values that are close to the new color value corresponding to each of the plurality of pixel points are selected from color values corresponding to a target color depth. The two adjacent color values corresponding to each of the plurality of pixel points are sequentially read in a preset reading sequence, and a target image is displayed.

As at least one alternative embodiment, in the example, the nonvolatile storage medium is configured to store program codes used for performing the following steps. The adjacent pixel point corresponding to each of the plurality of pixel points is determined in an arrangement sequence of the plurality of pixel points in the initial image as follows: a selection manner of the adjacent pixel point corresponding to each of the plurality of pixel points is determined in a preset pixel point adjustment sequence; and the adjacent pixel point corresponding to each of the plurality of pixel points is determined based on the arrangement sequence and the selection manner.

As at least one alternative embodiment, in the example, the nonvolatile storage medium is configured to store program codes used for performing the following steps. The initial color value corresponding to the adjacent pixel point corresponding to each of the plurality of pixel points is adjusted according to the initial color value corresponding to each of the plurality of pixel points, and the new color value corresponding to each of the plurality of pixel points is obtained. A color diffusion value corresponding to the adjacent pixel point corresponding to each of the plurality of pixel points is sequentially determined in a preset pixel point adjustment sequence according to the initial color value corresponding to each of the plurality of pixel points. The initial color value corresponding to the adjacent pixel point corresponding to each of the plurality of pixel points is adjusted according to the color diffusion value corresponding to the adjacent pixel point corresponding to each of the plurality of pixel points. The new color value corresponding to each of the plurality of pixel points is obtained.

As at least one alternative embodiment, in the example, the nonvolatile storage medium is configured to store program codes used for performing the following steps. The color diffusion value corresponding to the adjacent pixel point corresponding to each of the plurality of pixel points is sequentially determined in the preset pixel point adjustment sequence according to the initial color value corresponding to each of the plurality of pixel points as follows: an intermediate color value corresponding to each of the plurality of pixel points is determined based on the initial color value corresponding to each of the plurality of pixel points; a difference value between the initial color value corresponding to each of the plurality of pixel points and the intermediate color value corresponding to each of the plurality of pixel points is calculated; and a product of the difference value corresponding to each of the plurality of pixel points and a preset ratio is calculated, and the color diffusion value corresponding to the adjacent pixel point corresponding to each of the plurality of pixel points is obtained.

As at least one alternative embodiment, in the example, the nonvolatile storage medium is configured to store program codes used for performing the following steps. The intermediate color value corresponding to each of the plurality of pixel points is determined based on the initial color value corresponding to each of the plurality of pixel points as follows: a plurality of color regions are determined based on the target color depth; a color region corresponding to the initial color value corresponding to each of the plurality of pixel points is determined in the plurality of color regions; and an intermediate value of the color region corresponding to each of the plurality of pixel points is determined as the intermediate color value corresponding to each of the plurality of pixel points.

As at least one alternative embodiment, in the example, the nonvolatile storage medium is configured to store program codes used for performing the following steps. The two adjacent color values corresponding to each of the plurality of pixel points are sequentially read in the preset reading sequence, and the target image is displayed. A number proportion corresponding each of the two adjacent color values corresponding to each of the plurality of pixel points is determined based on the new color value corresponding to each of the plurality of pixel points and the two adjacent color values corresponding to each of the plurality of pixel points. A reading number corresponding to each of the two adjacent color values corresponding to each of the plurality of pixel points is determined based on the number proportion corresponding to each of the two adjacent color values corresponding to each of the plurality of pixel points. The two adjacent color values corresponding to each of the plurality of pixel points are sequentially read in the reading sequence based on the reading number corresponding to each of the two adjacent color values corresponding to each of the plurality of pixel points, and the target image is displayed.

As at least one alternative embodiment, in the example, the nonvolatile storage medium is configured to store program codes used for performing the following steps. The number proportion corresponding to each of the two adjacent color values corresponding to each of the plurality of pixel points is determined based on the new color value corresponding to each of the plurality of pixel points and the two adjacent color values corresponding to each of the plurality of pixel points as follows: a difference value between each of the two adjacent color values corresponding to each of the plurality of pixel points and the new color value corresponding to each of the plurality of pixel points is calculated as a first difference value corresponding to each of the two adjacent color values corresponding to each of the plurality of pixel points; a difference value between the two adjacent color values corresponding to each of the plurality of pixel points is calculated as a second difference value corresponding to each of the plurality of pixel points; and the number proportion corresponding to each of the two adjacent color values corresponding to each of the plurality of pixel points is determined based on a ratio of the first difference value corresponding to each of the two adjacent color values corresponding to each of the plurality of pixel points to the second difference value corresponding to each of the plurality of pixel points.

As at least one alternative embodiment, in the example, the nonvolatile storage medium is configured to store program codes used for performing the following steps. An initial video is obtained. The initial video is divided into a plurality of images, where the initial image is one of the plurality of images. Steps that the two adjacent color values corresponding to each of the plurality of pixel points are sequentially read in the preset reading sequence and the target image is displayed are performed on the plurality of images, the plurality of target images are displayed, and a target video is obtained.

The examples of the present disclosure further provide a computer program product. The computer program product includes a computer program. As at least one alternative embodiment, in the example, the computer program when executed by a processor may implement the following steps. An initial color value corresponding to each of a plurality of pixel points in an initial image is acquired, wherein the initial color value is a color value corresponding to an initial color depth. An adjacent pixel point corresponding to each of the plurality of pixel points is determined in an arrangement sequence of the plurality of pixel points in the initial image. An initial color value corresponding to the adjacent pixel point corresponding to each of the plurality of pixel points is adjusted according to the initial color value corresponding to each of the plurality of pixel points, and a new color value corresponding to each of the plurality of pixel points is obtained. Two adjacent color values that are close to the new color value corresponding to each of the plurality of pixel points are selected from color values corresponding to a target color depth. The two adjacent color values corresponding to each of the plurality of pixel points are sequentially read in a preset reading sequence, and a target image is displayed.

The serial numbers of the above examples of the present disclosure are merely for description and do not represent the superior and inferior of the examples.

The description in each example of the present disclosure has its own emphasis. Reference may be made to the relevant descriptions of other examples for the part not described in detail in an example.

In several examples provided by the present application, it should be understood that the technical contents disclosed may be implemented in other ways. For example, the device example described above is merely illustrative. For example, division of the unit may be division of logic functions. Other division methods may be employed during actual implementation. For example, a plurality of units or assemblies may be combined or integrated into another system, or some features may be omitted or may not be executed. Further, mutual coupling, direct coupling, or communication connection shown or discussed may be indirect coupling or communication connection through some interfaces, units, or modules in an electrical manner, etc.

The unit described as a separate component may be physically separated or not. The component shown as a unit may be a physical unit or not. That is, the components may be positioned in one place or distributed over a plurality of units. Some or all units may be selected as required actually to achieve the solution in the example.

In addition, functional units in the examples of the present disclosure may be integrated into one processing unit, or each of the units may be physically separated, or two or more units may be integrated into one unit. The above integrated units may be implemented in the form of hardware or software function units.

When being implemented in the form of a software functional unit and sold or used as an independent product, the integrated unit may be stored in a nonvolatile storage medium. Based on such understanding, the technical solutions of the present disclosure in essence, the part that contributes to the prior art, or all or some of the technical solutions may be embodied in the form of a software product. A computer software product is stored in one storage medium and includes several instructions to enable a computer apparatus (which may be a personal computer, a server, or a network apparatus) to perform all or some of the steps of the method in each example of the present disclosure. The foregoing storage medium includes: various media capable of storing a program code, such as a universal serial bus (USB) flash disk, a read-only memory (ROM), a random access memory (RAM), a mobile hard disk, a magnetic disk, and an optical disk.

The above descriptions are merely preferred embodiments of the present disclosure. It should be noted that those of ordinary skill in the art may further make several improvements and modifications without departing from the principle of the present disclosure, but such improvements and modifications should be deemed as falling within the scope of protection of the present disclosure.

**Claims**

1. A method for processing an image, comprising:

   acquiring an initial color value corresponding to each of a plurality of pixel points in an initial image, wherein the initial color value is a color value corresponding to an initial color depth;
   determining an adjacent pixel point corresponding to each of the plurality of pixel points in an arrangement sequence of the plurality of pixel points in the initial image;
   adjusting an initial color value corresponding to the adjacent pixel point corresponding to each of the plurality of pixel points according to the initial color value corresponding to each of the plurality of pixel points, and obtaining a new color value corresponding to each of the plurality of pixel points;
   selecting two adjacent color values that are close to the new color value corresponding to each of the plurality of pixel points from color values corresponding to a target color depth; and
   sequentially reading the two adjacent color values corresponding to each of the plurality of pixel points in a preset reading sequence, and displaying a target image.

2. The method as claimed in claim 1, wherein the determining an adjacent pixel point corresponding to each of the plurality of pixel points in an arrangement sequence of the plurality of pixel points in the initial image comprises:

   determining a selection manner of the adjacent pixel point corresponding to each of the plurality of pixel points in a preset pixel point adjustment sequence; and
   determining the adjacent pixel point corresponding to each of the plurality of pixel points based on the arrangement sequence and the selection manner.

3. The method as claimed in claim 1, wherein the adjusting an initial color value corresponding to the adjacent pixel point corresponding to each of the plurality of pixel points according to the initial color value corresponding to each of the plurality of pixel points, and obtaining a new color value corresponding to each of the plurality of pixel points comprise:

   sequentially determining a color diffusion value corresponding to the adjacent pixel point corresponding to each of the plurality of pixel points in a preset pixel point adjustment sequence according to the initial color value corresponding to each of the plurality of pixel points; and
   adjusting the initial color value corresponding to the adjacent pixel point corresponding to each of the plurality of pixel points according to the color diffusion value corresponding to the adjacent pixel point corresponding to each of the plurality of pixel points, and obtaining the new color value corresponding to each of the plurality of pixel points.

4. The method as claimed in claim 3, wherein the sequentially determining a color diffusion value corresponding to the adjacent pixel point corresponding to each of the plurality of pixel points in a preset pixel point adjustment sequence according to the initial color value corresponding to each of the plurality of pixel points comprises:

   determining an intermediate color value corresponding to each of the plurality of pixel points based on the initial color value corresponding to each of the plurality of pixel points;
   calculating a difference value between the initial color value corresponding to each of the plurality of pixel points and the intermediate color value corresponding to each of the plurality of pixel points; and
   calculating a product of the difference value corresponding to each of the plurality of pixel points and a preset ratio, and obtaining the color diffusion value corresponding to the adjacent pixel point corresponding to each of the plurality of pixel points.

5. The method as claimed in claim 4, wherein the determining an intermediate color value corresponding to each of the plurality of pixel points based on the initial color value corresponding to each of the plurality of pixel points comprises:

   determining a plurality of color regions based on the target color depth;
   determining a color region corresponding to the initial color value corresponding to each of the plurality of pixel points in the plurality of color regions; and
   determining an intermediate value of the color region corresponding to each of the plurality of pixel points as the intermediate color value corresponding to each of the plurality of pixel points.

6. The method as claimed in claim 1, wherein the sequentially reading the two adjacent color values corresponding to each of the plurality of pixel points in a preset reading sequence, and displaying a target image comprise:

determining a number proportion corresponding each of the two adjacent color values corresponding to each of the plurality of pixel points based on the new color value corresponding to each of the plurality of pixel points and the two adjacent color values corresponding to each of the plurality of pixel points;

determining a reading number corresponding to each of the two adjacent color values corresponding to each of the plurality of pixel points based on the number proportion corresponding to each of the two adjacent color values corresponding to each of the plurality of pixel points; and

sequentially reading the two adjacent color values corresponding to each of the plurality of pixel points in the reading sequence based on the reading number corresponding to each of the two adjacent color values corresponding to each of the plurality of pixel points, and displaying the target image.

7. The method as claimed in claim 6, wherein the determining a number proportion corresponding to each of the two adjacent color values corresponding to each of the plurality of pixel points based on the new color value corresponding to each of the plurality of pixel points and the two adjacent color values corresponding to each of the plurality of pixel points comprises:

calculating a difference value between each of the two adjacent color values corresponding to each of the plurality of pixel points and the new color value corresponding to each of the plurality of pixel points as a first difference value corresponding to each of the two adjacent color values corresponding to each of the plurality of pixel points;

calculating a difference value between the two adjacent color values corresponding to each of the plurality of pixel points as a second difference value corresponding to each of the plurality of pixel points; and

determining the number proportion corresponding to each of the two adjacent color values corresponding to each of the plurality of pixel points based on a ratio of the first difference value corresponding to each of the two adjacent color values corresponding to each of the plurality of pixel points to the second difference value corresponding to each of the plurality of pixel points.

8. The method as claimed in any one of claims 1-7, further comprising:

acquiring an initial video;

dividing the initial video into a plurality of images, wherein the initial image is one of the plurality of images; and

performing steps of the sequentially reading the two adjacent color values corresponding to each of the plurality of pixel points in a preset reading sequence, and displaying a target image on the plurality of images, displaying a plurality of target images, and obtaining a target video.

9. A device for processing an image, comprising:

an obtainment module used for acquiring an initial color value corresponding to each of a plurality of pixel points in an initial image, wherein the initial color value is a color value corresponding to an initial color depth;

a determination module used for determining an adjacent pixel point corresponding to each of the plurality of pixel points in an arrangement sequence of the plurality of pixel points in the initial image;

an adjustment module used for adjusting an initial color value corresponding to the adjacent pixel point corresponding to each of the plurality of pixel points according to the initial color value corresponding to each of the plurality of pixel points, and obtaining a new color value corresponding to each of the plurality of pixel points;

a selection module used for selecting two adjacent color values that are close to the new color value corresponding to each of the plurality of pixel points from color values corresponding to a target color depth; and

a reading module used for sequentially reading the two adjacent color values corresponding to each of the plurality of pixel points in a preset reading sequence, and displaying a target image.

10. A nonvolatile storage medium, comprising a stored program, wherein the program controls an apparatus where the nonvolatile storage medium is positioned to perform the method for processing an image according to any one of claims 1-8 when run.

11. A computer apparatus, comprising: a memory and a processor, wherein

the memory stores a computer program; and the processor is used for executing the computer program stored in the memory, and the computer program causes the processor to perform the method for processing an image according to any one of claims 1-8 when run.

12. A computer program product, comprising a computer program, wherein the computer program implements the method for processing an image according to any one of claims 1-8 when executed by a processor.

Fig. 1

Computer terminal 10

| Processor 102a | Processor 102b | ...... | Processor 102n |

Bus

Memory 104

| Program instruction | Data storage device |

Network interface

Input/output interface

Wired and/or wireless network connection

Cursor control apparatus

Keyboard

Display

Fig. 2

An initial color value corresponding to each of a plurality of pixel points in an initial image is acquired, wherein the initial color value is a color value corresponding to an initial color depth — S201

An adjacent pixel point corresponding to each of the plurality of pixel points is determined in an arrangement sequence of the plurality of pixel points in the initial image — S202

An initial color value corresponding to the adjacent pixel point corresponding to each of the plurality of pixel points is adjusted according to the initial color value corresponding to each of the plurality of pixel points, and a new color value corresponding to each of the plurality of pixel points is obtained — S203

Two adjacent color values that are close to the new color value corresponding to each of the plurality of pixel points are selected from color values corresponding to a target color depth — S204

The two adjacent color values corresponding to each of the plurality of pixel points are sequentially read in a preset reading sequence, and a target image is displayed — S205

Fig. 3

S1: a first frame of image of a video is collected

S2: a color depth of the image and a desired color depth are determined

S3: a first pixel point in an upper left corner of the image is extracted for error diffusion processing

S4: after the above error diffusion processing, a new color value of each pixel point is obtained, two corresponding color values closest to the new color value of each pixel point at a low color depth are selected, and a deviation ratio corresponding to each of the two color values may be calculated according to a formula that "a difference value between each of the two color values and an original value/a difference value between the two color values = the deviation ratio"

S5: according to the deviation ratios calculated for each pixel point, the two color values calculated for each pixel point are alternately stored in memories according to a formula that" the deviation ratio * the number of memories = a stored number"

S6: a color value stored in each memory is sequentially read out for display

S7: each frame is traversed

Fig. 4

Obtainment module 41

Determination module 42

Adjustment module 43

Selection module 44

Reading module 45

# EUROPEAN SEARCH REPORT

**Application Number**

EP 25 17 4412

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | US 2010/098337 A1 (TSUKAMOTO MAKOTO [JP]) 22 April 2010 (2010-04-22) * paragraph [0051] - paragraph [0101]; figures 2-5 * | 1-12 | INV. G09G3/20 H04N9/64 H04N1/40 H04N1/64 |
| X | US 2013/215326 A1 (SATO AKIHIRO [JP]) 22 August 2013 (2013-08-22) * paragraph [0050] - paragraph [0067]; figures 5, 8-11 * | 1-12 | |
| X | US 2005/140584 A1 (KIM HWAN Y [KR] ET AL) 30 June 2005 (2005-06-30) * paragraph [0087] - paragraph [0107]; figures 6-12 * | 1-12 | |
| A | MULLIGAN J B ED - SOCIETY FOR INFORMATION DISPLAY: "METHODS FOR SPATIOTEMPORAL DITHERING", SID INTERNATIONAL SYMPOSIUM - DIGEST OF TECHNICAL PAPERS. SEATTLE, MAY 16 - 21, 1993; [SID INTERNATIONAL SYMPOSIUM - DIGEST OF TECHNICAL PAPERS], PLAYA DEL REY, SID, US, vol. 24 PART 01, 16 May 1993 (1993-05-16), pages 155-158, XP000470752, * the whole document * | 1-12 | TECHNICAL FIELDS SEARCHED (IPC)<br><br>H04N<br>G09G |

The present search report has been drawn up for all claims

| Place of search | Date of completion of the search | Examiner |
|---|---|---|
| Munich | 18 September 2025 | Seytter, Fritz |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO FORM 1503 03.82 (P04C01)

**EP 4 715 794 A1**

## ANNEX TO THE EUROPEAN SEARCH REPORT
## ON EUROPEAN PATENT APPLICATION NO.

EP 25 17 4412

This annex lists the patent family members relating to the patent documents cited in the above-mentioned European search report.
The members are as contained in the European Patent Office EDP file on
The European Patent Office is in no way liable for these particulars which are merely given for the purpose of information.

18-09-2025

| Patent document cited in search report | Publication date | Patent family member(s) | Publication date |
|---|---|---|---|
| US 2010098337 A1 | 22-04-2010 | AT E536051 T1 | 15-12-2011 |
| | | CN 101729762 A | 09-06-2010 |
| | | EP 2180715 A2 | 28-04-2010 |
| | | JP 4577590 B2 | 10-11-2010 |
| | | JP 2010103697 A | 06-05-2010 |
| | | US 2010098337 A1 | 22-04-2010 |
| US 2013215326 A1 | 22-08-2013 | CN 103119640 A | 22-05-2013 |
| | | EP 2624247 A1 | 07-08-2013 |
| | | US 2013215326 A1 | 22-08-2013 |
| | | WO 2012043454 A1 | 05-04-2012 |
| US 2005140584 A1 | 30-06-2005 | CN 1629923 A | 22-06-2005 |
| | | DE 602004009522 T2 | 24-07-2008 |
| | | EP 1548696 A1 | 29-06-2005 |
| | | JP 2005182017 A | 07-07-2005 |
| | | KR 20050060219 A | 22-06-2005 |
| | | US 2005140584 A1 | 30-06-2005 |

EPO FORM P0459

For more details about this annex : see Official Journal of the European Patent Office, No. 12/82